# EUROPEAN PATENT APPLICATION

(11) **EP 4 187 893 A1**
(43) Date of publication of application: **31.05.2023**
(21) Application number: 21306664.0
(22) Date of filing: 30.11.2021
(51) Int. Cl.: H04N 5/225, G03B 15/00, H04N 1/028, H04N 1/03, H04N 9/31

(54) **THIN-FILM OPTICAL SYSTEM**

(71) Applicant: Travoptics, 75019 Paris (FR)
(72) Inventor: Leigh Travis, Adrian Robert, 75019 PARIS (FR)
(74) Representative: Plasseraud IP

(57) **Abstract**

A planar optical element, in particular a camera, comprises a diverter 14 for diverting light from an object into an imaging plane; a planar lens waveguide 16 in the imaging plane, receiving the diverted light and focusing it onto a line; and a sensor line 20 located on the focus line, for forming a one-dimensional image of the object. Many such elements can be applied to a planar substrate, such as a display screen, at different angles to a given direction on the substrate, and the one-dimensional inputs Fourier-analysed to reconstruct the desired two-dimensional image.

The elements (apart from the diverter) can be transparent to light, so that the substrate can be a display screen; this eliminates the need to locate a camera to the side of the screen, and also means that for videoconferencing the user looking at the screen will be looking into the camera. For larger screens the elements can cover all or most of the screen, and a subset of the elements, covering a relatively small area of, say, 30x30 mm, chosen at any given time to constitute the camera.

The system can also be run backwards as a projector, with light-emitting elements instead of sensors.

## Description

The present invention relates to thin-film cameras and other optical devices, and in particular to capturing an image from any point within the periphery of a slim display.

Video displays are typically opaque in the sense that a camera placed behind the display cannot capture an image of something in front of the display. Cameras are therefore often placed at the edge of a display with the unwanted result that speakers in a video conference appear not to be looking at one another. It is thought that users would like a display to behave more like a window in the sense that an image could be captured as if from a camera at any point behind the screen.

It is well-known that the compound eye of a house fly covers a large area but is thin. Following this lead, arrays of tiny cameras have been placed in front of screens with the aim of capturing an image from any point on the screen. The resolution of any camera is, however, limited by aperture diffraction: the number of rows or columns in the image can be no greater than the diameter of the camera lens divided by the wavelength of light. The focal length of a camera will typically be at least as big as its diameter so camera arrays are rarely thinner than 1 mm while having the further disadvantage that they are opaque. Note that the information passed by each element of a compound eye or camera can be much less than for a conventional camera: it is the lens of a compound eye, not information theory, that keeps it thick.

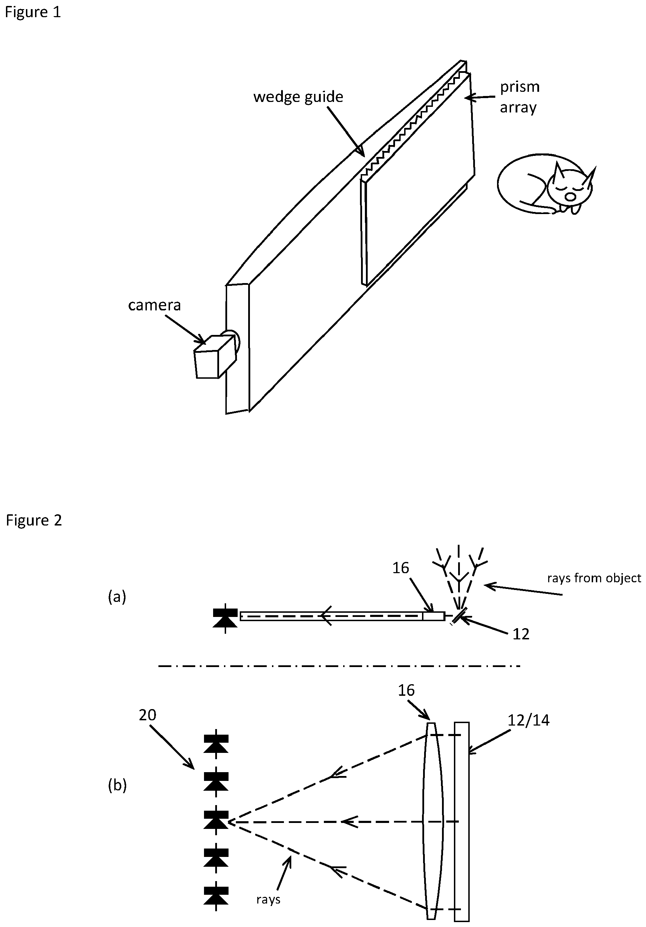

WO 02/45413 by the present inventor disclosed a wedge-shaped wave-guide and a turning film placed adjacent to a screen that transferred light from objects in front of the screen to a camera at the screen edge (see Figure 1). The image captured by the device is similar to what would be captured by a conventional camera if it were placed some distance behind the screen and the screen made transparent. The principle of aperture diffraction still applies so the wave-guide is usually at least 1 mm thick.

Note, however, that because rays are deflected so as to travel parallel to the guide surface, it is possible to bring to a focus rays from an aperture that is thin but wide, i.e. a slit aperture. Even a very thin system might in principle therefore produce images with a resolution that is high in one dimension albeit low in the orthogonal dimension.

This invention is defined in claims 1 and 10. Important features of embodiments are:
1. An array of cameras that are each two-dimensional in the sense of having a one-dimensional aperture (slit) through which rays are brought to focus by a two-dimensional or planar lens onto a one-dimensional array of photosensors.
2. The slits of the cameras are arranged at a variety of angles relative to one another.
3. A computed tomography algorithm is used to calculate the two-dimensional image from the several one-dimensional images formed by the cameras.

For a better understanding of the invention, embodiments will now be described with reference to the attached drawings, in which:
- Figure 1: is prior art and shows how a wedge guide can be used as a slim camera by putting a prism array on its surface and pointing a camera into the thick end;
- Figure 2: shows the layout of a single two-dimensional camera in accordance with the invention, in plan and profile;
- Figure 3: shows the camera in front of an object, tracing wave-fronts backwards through the system, from photodetector to object;

- Figure 4: shows an embodiment with several cameras mounted on a flat panel, in which the photosensor array of each camera is to form a projection of the two-dimensional image from a unique angle;
- Figure 5: illustrates the algorithm that is used to synthesise the image from the one-dimensional array of photosensors;
- Figure 6: shows a variant in which a Lüneburg lens is used in the camera;
- Figure 7: shows a refinement in which the Lüneburg lens is put to use twice, for two different cameras; and
- Figure 8: shows notionally the information captured by each camera.

Referring to **Figure 2**, a two-dimensional camera 10 can be thought of as a thin slice sawn out of the centre plane of a conventional camera. The lens might therefore be a slice through the centre-plane of any conventional camera lens including for example a Cooke triplet or a double Gauss, shown here as a simple lens shape 16.

Figure 2a shows the camera in plan, thinking of the lens slice as being vertically oriented for present purposes, and Figure 2b shows it in elevation, as would be commonly the case with the camera mounted on a display screen. In Figure 2, though not shown in Figure 2(b), the lens 16 is integral to part of a waveguide leading to a photodetector array 20, i.e. there is part of the waveguide that has either a graded index core or, more likely, added high-index material between core and cladding that causes light to focus in the desired manner.

At the lens aperture, which is a long (notional) slit 14, there is a prism 12, reflecting strip or similar that deflects light from air into the plane of the lens 16, which being thin acts as a waveguide. Rays are then refracted by the guide 16 to converge at points on a linear photodetector array 20 parallel to the aperture on the opposite side of the lens waveguide.

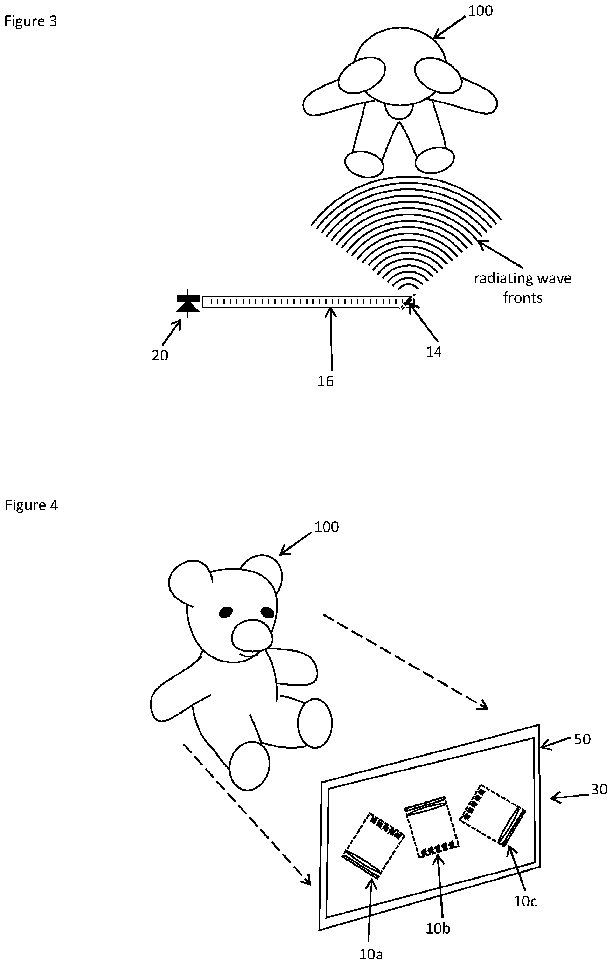

In **Figure 3**, which shows a view similar to Figure 2a, with an object 100 placed in front of the camera, rays are traced backwards from the image sensor (photodetector) 20 through the waveguide 16 to the light deflector 12 where, because of aperture diffraction, the ray wavefront radiates in the plane of the diagram as the ray travels to the object 100. Figure 3 demonstrates how each pixel (i.e. single photodetector) of the two-dimensional camera captures the sum of all pixels in one row (here horizontal) of the image that would be formed or received were a conventional camera to be pointed at the object.

**Figure 4** illustrates an array 30 of flat cameras 10a, 10b, 10c, mounted on a display screen 50 in the same (vertical) plane but with different orientations, facing an object 100, showing the pattern of light that is to be formed by each camera. Three cameras are shown but there would probably be hundreds or thousands in practice.

The array of cameras 10a, 10b, 10c will be laid like a film on the surface of a flat panel display 50 and, because the sensor array is only a small fraction of the area of each camera, the area of the camera will be mostly transparent to light from the display. An opaque layer (not shown) may be placed between the sensors and the display in order that light from the display does not affect the sensors.

The image-processing task is like that in X-ray computed tomography where each slice of the object is two-dimensional and each detector captures X-rays that have travelled through one column of the slice, summing the various local intensities throughout the column.

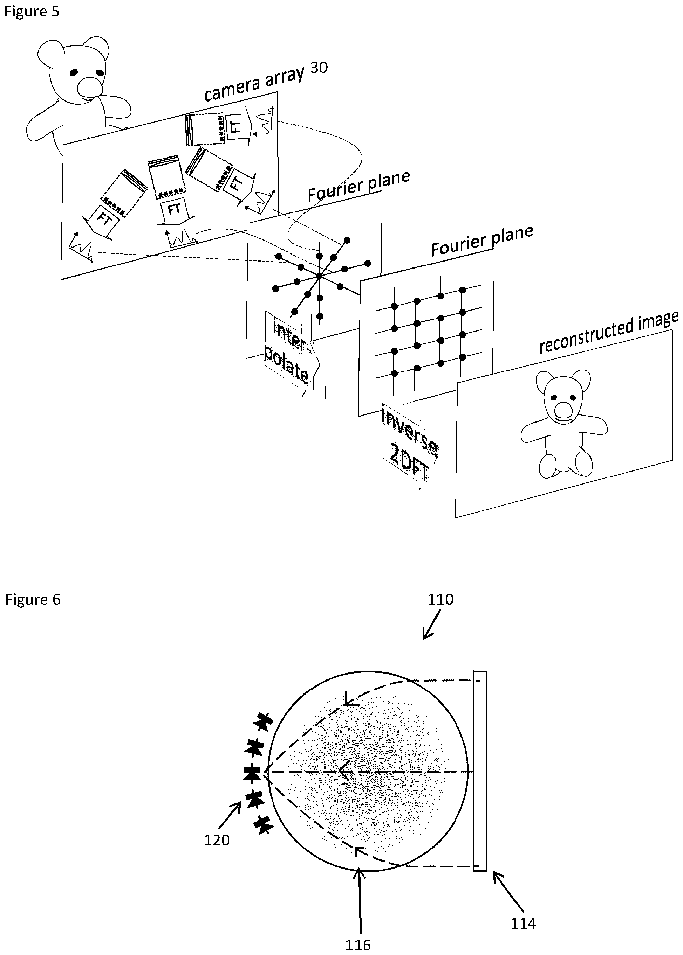

Algorithms for computed tomography are described in S. W. Smith, 'The Scientist and Engineer's Guide to Digital Signal Processing', California Technical Publishing, pages 444-449, 1997. A good approach is to take the one-dimensional Fourier transform of the intensities from each camera and plot each Fourier transform in the Fourier plane at an angle to the horizontal that equals the angle to the display horizontal of the associated camera. This is illustrated in **Figure 5**, which shows how the whole Fourier plane can be populated and the image found by taking the inverse two-dimensional Fourier transform of the Fourier plane, a task made simpler if the pattern in the Fourier plane is first interpolated to Cartesian co-ordinates as shown.

**Figure 6** illustrates an alternative design in which a Lüneburg lens is used. In general this is a cylindrical lens with a graded index such that parallel light entering from the side of the cylinder is focused on the opposite wall; see for instance Di Falco A., Kehr S. C. and Leonhardt U., "Luneburg lens in silicon photonics", Optics Express 19 (6) pp. 5156-5162. Thus, as before, light entering normally into the plane of the paper will be diverted by the aperture/ prism 114 and focused on the central photodetector 120 by the lens 116, and light entering at an angle to the normal (up or down the plane of the paper) will be focused to the side. A complication is that the line of photodetectors 120 will need to be curved to follow the diameter of the lens as shown.

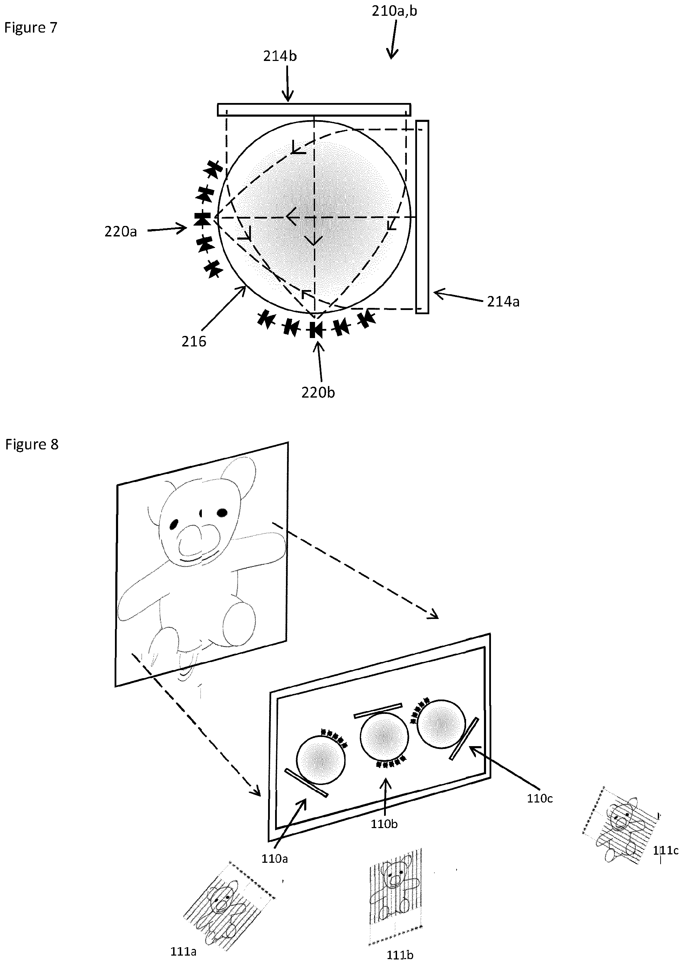

**Figure 7** shows a further refinement of this idea, where the same Luneburg lens 216 is used to form two independent cameras 210a, b operating in orthogonal directions, each having its own array of photodetectors 220a, b. This halves the number of lenses used and thus nearly halves the area taken up by a given number of cameras.

**Figure 8** is a view similar to that of Figure 4 but using Luneburg lenses, and also showing schematically the images 111 caught by each camera 110, indicating how the respective images are divided in to columns/rows, although of course each camera outputs only an array of points representing sums along the columns, and the full 2D image has to be extracted as described above.

In a typical use, the object is to be placed in front of the display; normally the object will be the user, who is looking at a particular part of the screen, but generally around the middle. For a small screen such as that on a mobile phone, or even a large screen, this is already an improvement, as compared to a camera located off the edge of the screen.

For further improvement, the entire screen, or most of it, may be covered by the cameras and the image processor may use a closely spaced group of two-dimensional cameras from whichever point of view on the display is desired, which may change, for example, during a conference call with several participants.

It is desirable that the array of slits handle light as efficiently as a conventional camera; a 33 mm by 33 mm array of slits measuring 1 mm by 1 micron (i.e. about 1000 slits) will have the same surface area as a conventional camera with an aperture of 1 mm by 1 mm. However, aperture diffraction by the slit may cause much of the transient light to miss the line of photodetectors. The lens plane should therefore comprise a wave-guide with sufficient numerical aperture to collect all light passing through the slit. If the guide is multi-mode, rays at higher order modes may be focused by the lens over a different distance than rays in the fundamental mode. Preferably, therefore, the guide will be monomode; for example, it may be a step-index guide.

The disclosure thus concerns a planar optical element, in particular a camera, comprises a diverter 14 for diverting light from an object into an imaging plane; a planar lens waveguide 16 in the imaging plane, receiving the diverted light and focusing it onto a line; and a sensor line 20 located on the focus line, for forming a one-dimensional image of the object. Many such elements can be applied to a planar substrate, such as a display screen, at different angles to a given direction on the substrate, and the one-dimensional inputs Fourier-analysed to reconstruct the desired two-dimensional image.

The elements (apart from the diverter) can be transparent to light, so that the substrate can be a display screen; this eliminates the need to locate a camera to the side of the screen, and also means that for videoconferencing the user looking at the screen will be looking into the camera. For larger screens the elements can cover all or most of the screen, and a subset of the elements, covering a relatively small area of, say, 30x30 mm, chosen at any given time to constitute the camera.

The system can also be run backwards as a projector, with light-emitting elements instead of sensors.

## Claims

1. A camera element, comprising:
- a diverter (14) for diverting light from an object into an imaging plane;
- a planar waveguide (16) in the imaging plane, receiving the diverted light and focusing it onto a line; and
- a sensor line (20) located on the focus line, for forming a one-dimensional image of the object.

2. A camera element according to claim 1, in which the sensor line is a row of photodetectors.

3. A camera element according to claim 1 or 2, in which the diverter (14) is a prism or angled reflector.

4. A camera element according to any preceding claim, in which the waveguide (16) is a lens having the shape of a thin slice through a three-dimensional lens.

5. A camera element according to any of claims 1 to 3, in which the waveguide (16) is a lens having a graded index, in particular in which the lens is a Lüneburg lens (116) and the row of photodetectors (120) is curved to match the circumference of the lens.

6. A camera element according to claim 5, and having a further diverter (214b) and sensor line (220b) using the same lens (216) to form a pair of orthogonally operating camera elements.

7. A camera device including an array (30) of camera elements according to any preceding claim, arranged in the same plane at different orientations.

8. A camera device according to claim 7, further including processing means for constructing an image from the one-dimensional outputs of the sensor lines of the camera elements.

9. A display screen having on its surface camera elements of a camera device according to claim 7 or 8.

10. A display screen according to claim 9, in which the sensor line (20, 120, 220) of at least some of the camera elements has underneath it an opaque layer for preventing light from the display reaching the sensor line.

11. A display screen according to claim 9 or 10, further including or associated with software for controlling the camera device to activate only a portion of the camera elements, in dependence on a part of the screen that gives a specified camera angle.

12. A videoconferencing facility using one or more display screens according to claim 11, adapted to select the camera angle corresponding to the position on the screen of the current speaker.

13. An imaging method using an array of camera elements in a plane, in which each element collects imaging information in one dimension, and the resulting outputs are combined to form a two-dimensional image.

14. A method according to claim 13, in which the one-dimensional Fourier transform of each output is plotted in two dimensions and the result is inverse-transformed to form the 2D image.

15. A projector element, comprising:
- a line of pixel emitters for forming a one-dimensional image of a two-dimensional image to be projected;
- a planar waveguide in an imaging plane, receiving the emitted light and spreading it to travel parallel; and
- a diverter for diverting light from the waveguide out of the imaging plane toward a screen or further optical receiver.
